# EUROPEAN PATENT APPLICATION

(11) **EP 2 662 248 A1**
(43) Date of publication of application: **13.11.2013**
(21) Application number: 12732249.3
(22) Date of filing: 04.01.2012
(51) Int. Cl.: B60R 21/264, B01J 7/00

(54) **GAS GENERATOR**

(30) Priority: 07.01.2011 JP 2011001941
(71) Applicant: Nippon Kayaku Kabushiki Kaisha, Tokyo 102-8172 (JP)
(72) Inventor: OHSUGI, Satoshi, Himeji-shi Hyogo 679-2123 (JP); MUKUNOKI, Hirotaka, Himeji-shi Hyogo 679-2123 (JP); TANAKA, Yusuke, Himeji-shi Hyogo 679-2123 (JP)
(74) Representative: TBK
(86) International application number: PCT/JP2012/050027
(87) International publication number: WO 2012/093672

(57) **Abstract**

A gas generator (1A) includes a housing including a lower shell (10) and an upper shell (20), an igniter (40), a gas generating agent (61), and a filter (70). The housing includes a bottom plate portion (11) to which the igniter (40) is assembled and a combustion chamber (60) accommodating the gas generating agent (61). The filter (70) is formed from a hollow cylindrical member and disposed in the housing so as to surround the combustion chamber (60) in a radial direction of the housing. The bottom plate portion (11) is provided with a positioning portion (38) formed from a resin-molded portion secured to the bottom plate portion (11), which is formed by adhering a fluid resin material to an inner surface and solidifying the same, and the positioning portion (38) abuts to an inner circumferential surface of an axial end portion of the filter (70) located on a side of the bottom plate portion (11).

## Description

### TECHNICAL FIELD

The present invention relates to a gas generator incorporated in a passenger protection apparatus, and more particularly to what is called a disc type gas generator incorporated in an air bag apparatus equipped in a steering wheel or the like of a car.

### BACKGROUND ART

From a point of view of protection of a driver and/or a passenger in a car or the like, an air bag apparatus which is a passenger protection apparatus has conventionally widely been used. The air bag apparatus is equipped for the purpose of protecting a driver and/or a passenger against shock caused at the time of collision of a vehicle or the like, and it receives a body of a driver or a passenger with an air bag serving as a cushion, as the air bag is expanded and developed instantaneously at the time of collision of the vehicle or the like. The gas generator is equipment which is incorporated in this air bag apparatus, an igniter therein being ignited in response to power feed through a control unit at the time of collision of a vehicle or the like to thereby bum a gas generating agent with flame caused by the igniter and instantaneously generate a large amount of gas, and thus expands and develops an air bag. It is noted that the air bag apparatus is equipped, for example, in a steering wheel, an instrument panel, or the like of a car.

Gas generators of various structures are available, and in particular, what is called a disc type gas generator is available as a gas generator suitably made use of for a driver-seat-side air bag apparatus equipped in a steering wheel or the like. In general, the disc type gas generator has a short cylindrical housing of which axial end portions are closed, a gas discharge opening being provided in a circumferential wall of the housing, and the housing accommodating a gas generating agent, an igniter, a filter, and the like.

In this disc type gas generator, a filter is generally accommodated and arranged in a housing so as to surround a combustion chamber accommodating a gas generating agent. The filter functions as removal means for removing by catching residues (slag) contained in a gas generated in the combustion chamber and also functions as cooling means for lowering a temperature of the gas as the gas passes therethrough.

Normally, the housing is often constituted of a lower shell having a substantially cylindrical shape with bottom, which forms a part of a circumferential wall portion and a bottom plate portion, and an upper shell having a substantially cylindrical shape with bottom, which forms a remaining part of the circumferential wall portion and a top plate portion, and in that case, the filter above is assembled to the housing by being sandwiched between these lower shell and upper shell.

Here, an annular plate-shaped member made of metal, which is set on the bottom plate portion of the lower shell, is made use of for positioning of the filter in the housing. The plate-shaped member made of metal has an abutment portion abutting to an inner circumferential surface of the filter after assembly around its outer periphery, and positioning of the filter in a radial direction is made by externally inserting the filter around the abutment portion of the plate-shaped member made of metal during assembly of the filter.

Here, the plate-shaped member made of metal also has a function as an effluence prevention member preventing some of gas from flowing out through a gap between the filter and the lower shell and discharging through a gas discharge opening without passage through the filter during actuation of the gas generator, and it is arranged to extend along the inner circumferential surface of the filter defining the combustion chamber and along the inner surface of the lower shell after assembly.

It is noted that gas generators adopting the construction above are disclosed, for example, in Japanese Patent Laying-Open No. 10-81190 (PTD 1), Japanese Patent Laying-Open No. 11-189126 (PTD 2), Japanese Patent Laying-Open No. 2007-290620 (PTD 3), and the like.

### CITATION LIST

### PATENT DOCUMENT

PTD 1: Japanese Patent Laying-Open No. 10-81190
PTD 2: Japanese Patent Laying-Open No. 11-189126
PTD 3: Japanese Patent Laying-Open No. 2007-290620

### SUMMARY OF INVENTION

### TECHNICAL PROBLEM

In a case where the construction as disclosed in any of the documents above is adopted, however, a defective condition may be caused in a step of filling with a gas generating agent. Normally, in the step of filling with a gas generating agent, the combustion chamber is filled with a prescribed amount of gas generating agent while the plate-shaped member made of metal and the filter are assembled to the lower shell. Here, in order to fill the combustion chamber densely with a gas generating agent formed from a molding, the lower shell is generally vibrated.

Here, the plate-shaped member made of metal above is fluttered by vibration and in some cases the plate-shaped member made of metal floats, which leads to such a defective condition that the gas generating agent is introduced in between the plate-shaped member made of metal and the lower shell. If such a defective condition is caused, filling with a prescribed amount of gas generating agent fails and an operation for taking out the gas generating agent and again performing the filling step or the like is required, which complicates a manufacturing process.

In addition, in a case where the construction as disclosed in any of the documents above is adopted, a plate-shaped member made of metal described above should be arranged in the lower shell, and then a problem of induced complication of assembly operations due to increase in the number of parts or a problem of increase in weight of a gas generator as a whole due to addition of the plate-shaped member made of metal has also arisen.

Therefore, the present invention was made to solve the problems described above, and an object thereof is to provide a gas generator which can readily be manufactured without any defect and achieves lighter weight.

### SOLUTION TO PROBLEM

A gas generator based on a first aspect of the present invention includes a housing, an igniter, a filter, and a positioning portion. The housing is formed from a short cylindrical member which is constituted of a top plate portion and a bottom plate portion closing axial end portions and a circumferential wall portion provided with a gas discharge opening and includes therein a combustion chamber accommodating a gas generating agent. The igniter serves for burning the gas generating agent and is assembled to the bottom plate portion. The filter is formed from a hollow cylindrical member disposed in the housing and surrounding the combustion chamber in a radial direction of the housing. The housing at least has a lower shell including the bottom plate portion and an upper shell including the top plate portion. The positioning portion is formed from a resin-molded portion which is formed by attaching a fluid resin material to an inner surface of the lower shell and solidifying the fluid resin material so that at least a part of the resin-molded portion is secured to the lower shell, and positions the filter in a radial direction by abutting to at least one of an inner circumferential surface and an outer circumferential surface of an axial end portion of the filter located on a side of the bottom plate portion.

A gas generator based on a second aspect of the present invention includes a housing, an igniter, a filter, and a holding portion. The housing is formed from a short cylindrical member constituted of a top plate portion and a bottom plate portion closing axial end portions and a circumferential wall portion provided with a gas discharge opening and includes therein a combustion chamber accommodating a gas generating agent. The igniter serves for burning the gas generating agent and is assembled to the bottom plate portion. The filter is formed from a hollow cylindrical member disposed in the housing and surrounding the combustion chamber in a radial direction of the housing. The holding portion is provided on the bottom plate portion and holds the igniter. The housing at least has a lower shell including the bottom plate portion and an upper shell including the top plate portion. The lower shell includes a protruding cylindrical portion provided to protrude toward the top plate portion and an opening provided at an axial end portion of the protruding cylindrical portion, which is located on a side of the top plate portion. The holding portion includes a holding portion main body formed from a resin-molded portion which is formed by attaching a fluid resin material to the bottom plate portion so as to at least reach a part of an outer surface of the bottom plate portion from a part of an inner surface of the bottom plate portion through the opening and solidifying the fluid resin material so that at least a part of the resin-molded portion is secured to the bottom plate portion, for holding the igniter, an extended portion extending outward from the holding portion main body along the inner surface of the bottom plate portion, and a positioning portion provided in the extended portion, for positioning the filter in a radial direction by abutting to at least one of an inner circumferential surface and an outer circumferential surface of an axial end portion of the filter located on a side of the bottom plate portion.

In the gas generator based on the second aspect of the present invention above, preferably, the extended portion is secured to said bottom plate portion.

In the gas generator based on the first and second aspects of the present invention above, preferably, the positioning portion has an annular shape abutting to the filter along a circumferential direction of the filter.

In the gas generator based on the first and second aspects of the present invention above, a plurality of the positioning portions may be arranged as aligned along a circumferential direction of the filter.

In the gas generator based on the first and second aspects of the present invention above, preferably, the positioning portion is located on the bottom plate portion in a portion facing the combustion chamber and abuts only to the inner circumferential surface of the axial end portion of the filter located on the side of the bottom plate portion.

In the gas generator based on the first and second aspects of the present invention above, preferably, the lower shell is made of a press-formed product formed by press-working one plate-shaped member made of metal.

### ADVANTAGEOUS EFFECTS OF INVENTION

According to the present invention, a gas generator which can readily be manufactured without any defect and achieves lighter weight can be obtained.

### BRIEF DESCRIPTION OF DRAWINGS

Fig. 1 is a schematic diagram of a gas generator in Embodiment 1 of the present invention.
Fig. 2 is a plan view of a lower shell of the gas generator in Embodiment 1 of the present invention.
Fig. 3 is a schematic diagram showing a manner of assembly of a filter to the lower shell of the gas generator in Embodiment 1 of the present invention.
Fig. 4 is a plan view of a lower shell of a gas generator according to a variation based on Embodiment 1 of the present invention.
Fig. 5 is a schematic diagram of a gas generator in Embodiment 2 of the present invention.
Fig. 6 is a schematic diagram of a gas generator in Embodiment 3 of the present invention.
Fig. 7 is a schematic diagram of a gas generator in Embodiment 4 of the present invention.
Fig. 8 is a plan view of a lower shell of the gas generator in Embodiment 4 of the present invention.
Fig. 9 is a plan view of a lower shell of a gas generator according to a first variation based on Embodiment 4 of the present invention.
Fig. 10 is a plan view of a lower shell of a gas generator according to a second variation based on Embodiment 4 of the present invention.
Fig. 11 is a schematic diagram of a gas generator in Embodiment 5 of the present invention.
Fig. 12 is a plan view of a lower shell of the gas generator in Embodiment 5 of the present invention.
Fig. 13 is a schematic diagram of a gas generator in Embodiment 6 of the present invention.

### DESCRIPTION OF EMBODIMENTS

An embodiment of the present invention will be described hereinafter in detail with reference to the drawings. An embodiment and a variation thereof shown below represent application of the present invention to a disc type gas generator incorporated in an air bag apparatus equipped in a steering wheel or the like of a car. It is noted that the same or common elements in the embodiment and the variation thereof shown below have the same reference characters allotted in the drawings and description thereof will not be repeated.

### (Embodiment 1)

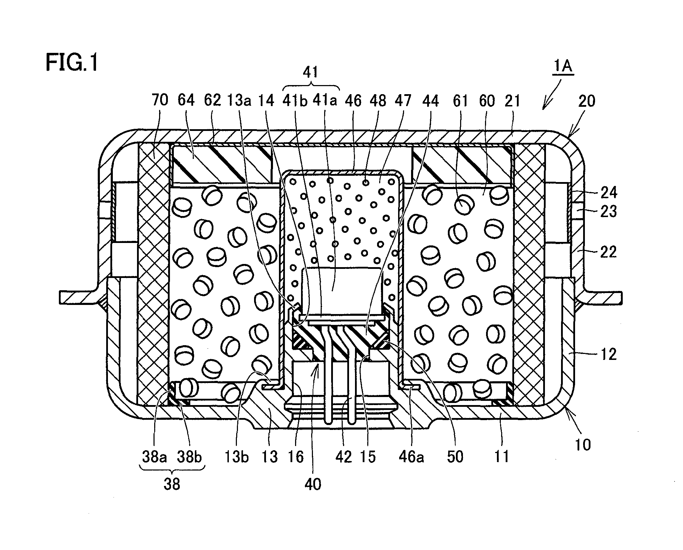

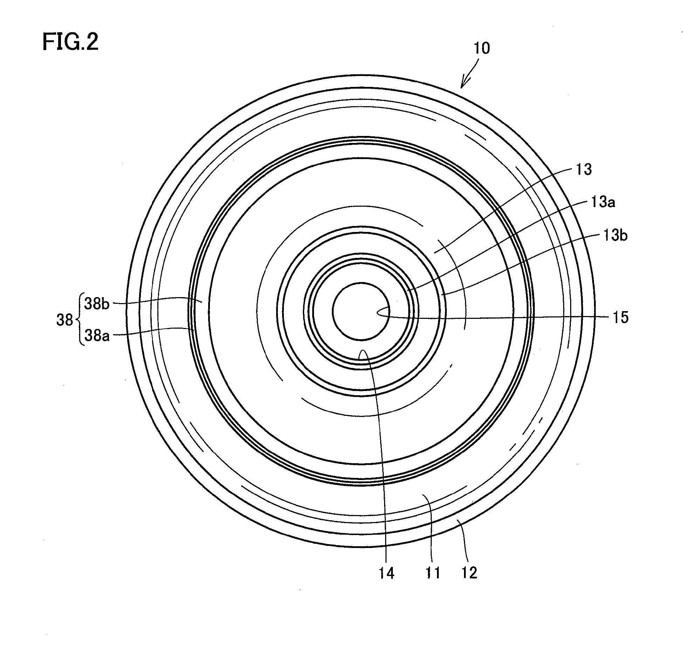

Fig. 1 is a schematic diagram of a gas generator in Embodiment 1 of the present invention. Fig. 2 is a plan view of a lower shell of the gas generator shown in Fig. 1. A structure of a gas generator 1A in the present embodiment will initially be described with reference to these Figs. 1 and 2.

As shown in Fig. 1, gas generator 1A in the present embodiment has a short cylindrical housing having opposing axial ends closed, and is constructed to accommodate as components in this housing, an igniter 40, a gas generating agent 61, a filter 70, and the like.

The short cylindrical housing includes a lower shell 10 and an upper shell 20. Lower shell 10 and upper shell 20 are each formed in a substantially cylindrical shape with bottom, and an outer shell portion of the housing is formed by combining and joining the shells such that open surfaces thereof face each other. Lower shell 10 has a bottom plate portion 11 and a circumferential wall portion 12 and upper shell 20 has a top plate portion 21 and a circumferential wall portion 22.

Lower shell 10 and upper shell 20 are each formed from a member made of metal such as stainless steel, iron steel, an aluminum alloy, and a stainless alloy. Lower shell 10 is formed from a metal member in a shape of a piece of block with the use of a mold or the like, through forging, drawing, press-working, or the like, or combination thereof. Upper shell 20 is made of a press-formed product formed by press-working one plate-shaped member made of metal. It is noted that electron-beam welding, laser welding, friction welding, or the like is suitably made use of for joining lower shell 10 and upper shell 20 to each other.

An attachment portion 13 is formed in a substantially central portion of bottom plate portion 11 of lower shell 10. This attachment portion 13 is a site to which igniter 40 is to be attached. Specifically, igniter 40 is attached to an accommodation recess portion 14 provided in attachment portion 13 from an inner side of lower shell 10 such that a terminal pin 42 of igniter 40 is inserted through an opening 15 provided in attachment portion 13, and a crimping portion 13a provided at a tip end of attachment portion 13 is crimped toward igniter 40 in this state. Thus, igniter 40 is fixed by crimping to attachment portion 13 of lower shell 10.

It is noted that, in an outer surface of a portion of bottom plate portion 11 where attachment portion 13 is provided, a female connector portion 16 is formed. This female connector portion 16 is a site for receiving a male connector (not shown) of a harness for connecting igniter 40 and a control unit (not shown) to each other. In this female connector portion 16, a portion of terminal pin 42 of igniter 40 closer to a lower end is arranged as being exposed. A male connector is inserted in female connector portion 16, so that electrical conduction between a core wire of the harness and terminal pin 42 is established.

Igniter 40 is an ignition device for producing flame and includes an agent loaded portion 41 in which an ignition agent is loaded, a pair of terminal pins 42 described above, and a cover portion 44 provided to cover a part of terminal pin 42. Agent loaded portion 41 contains an ignition agent generating flame as it is ignited and bums at the time of actuation and a resistor for igniting this ignition agent. The pair of terminal pins 42 is connected to agent loaded portion 41 for igniting the ignition agent.

More specifically, agent loaded portion 41 includes a squib cup 41 a made of a cup-shaped member and a base portion 41b which closes an opening end of squib cup 41a and holds the pair of terminal pins 42 as the pins are inserted therethrough, and has such a construction that the resistor (bridge wire) is attached to couple tip ends of the pair of terminal pins 42 inserted in squib cup 41a to each other and the ignition agent is loaded into squib cup 41a so as to surround or be proximate to this resistor. It is noted that cover portion 44 covers not only a part of terminal pin 42 described above but also base portion 41b.

Here, a Nichrome wire or the like is generally made use of as a resistor, and ZPP (zirconium potassium perchlorate), ZWPP (zirconium tungsten potassium perchlorate), lead tricinate, or the like is generally made use of as the ignition agent. It is noted that squib cup 41 a and base portion 41 b are generally made of metal or plastic and cover portion 44 is generally made of plastic.

Upon sensing collision, a prescribed amount of current flows in a resistor through terminal pin 42. As the prescribed amount of current flows in the resistor, Joule heat is generated in the resistor and the ignition agent starts burning. Flame at a high temperature caused by burning causes squib cup 41a storing the ignition agent to burst. A time period from flow of a current in the resistor until actuation of igniter 40 is generally not longer than 2 milliseconds in the case where a Nichrome wire is made use of for the resistor.

A sealing member 50 is interposed between igniter 40 and attachment portion 13. Sealing member 50 serves to hermetically seal an enhancer chamber 47 which will be described later by air-tightly sealing a gap created between igniter 40 and attachment portion 13, and it is inserted in the gap in fixing by crimping igniter 40 to attachment portion 13. A sealing member made of a material having sufficient heat resistance and durability is preferably made use of as sealing member 50, and for example, an O ring or the like made of an EPDM resin representing one type of ethylene propylene rubber is suitably made use of.

It is noted that hermeticity of enhancer chamber 47 can further be enhanced by separately applying a liquid sealing agent to a portion where sealing member 50 is to be interposed. Here, a liquid sealing agent containing a resin material excellent in heat resistance, durability, corrosion resistance, and the like after curing is suitably selected and made use of as the liquid sealing agent, and for example, a cyanoacrylate-based resin or a silicone-based resin is particularly suitably made use of as the resin material. In addition, for the resin material, other than the resin materials described above, a phenol-based resin, an epoxy-based resin, a melamine-based resin, a urea-based resin, a polyester-based resin, an alkyd-based resin, a polyurethane-based resin, a polyimide-based resin, a polyethylene-based resin, a polypropylene-based resin, a polyvinyl chloride-based resin, a polystyrene-based resin, a polyvinyl acetate-based resin, a polytetrafluoroethylene-based resin, an acrylonitrile butadiene styrene-based resin, an acrylonitrile styrene-based resin, an acryl-based resin, a polyamide-based resin, a polyacetal-based resin, a polycarbonate-based resin, a polyphenylene ether-based resin, a polybutylene terephthalate-based resin, a polyethylene terephthalate-based resin, a polyolefin-based resin, a polyphenylene sulfide-based resin, a polysulfone-based resin, a polyether sulfone-based resin, a polyarylate-based resin, a polyether ether ketone-based resin, a polyamide imide-based resin, a liquid crystal polymer, and the like can be made use of.

A cylindrical enhancer cup 46 with bottom is fixed to attachment portion 13 of lower shell 10 so as to cover igniter 40. Enhancer cup 46 has a top wall portion and a sidewall portion, and contains enhancer chamber 47 accommodating an enhancer agent 48. Enhancer cup 46 is fixed to attachment portion 13 such that enhancer chamber 47 provided therein faces agent loaded portion 41. More specifically, a flange portion 46a is provided to protrude outward, at an end portion on an opening end side of enhancer cup 46 and flange portion 46a of enhancer cup 46 is crimped by a crimping portion 13b provided in attachment portion 13, so that enhancer cup 46 is fixed to attachment portion 13.

Enhancer cup 46 completely hermetically seals enhancer chamber 47 provided therein while it is fixed to attachment portion 13 of lower shell 10. This enhancer cup 46 bursts or melts with increase in pressure or with transfer of generated heat within enhancer chamber 47 when igniter 40 is actuated and enhancer agent 48 is ignited. It is noted that aluminum, an aluminum alloy, plastic, or the like is suitably made use of as a material for enhancer cup 46.

Enhancer agent 48 loaded in enhancer chamber 47 produces thermal particles as it is ignited by the flame caused by actuation of igniter 40 and it bums. Enhancer agent 48 should be able to reliably start burning a gas generating agent 61 which will be described later, and generally, a composition or the like composed of metal powders/oxidizing agent represented by B/KNO₃ or the like is employed. For enhancer agent 48, a powdery enhancer agent, an enhancer agent formed in a prescribed shape by a binder, or the like is made use of. A shape of the enhancer agent formed by a binder includes, for example, various shapes such as a granule, a column, a sheet, a sphere, a cylinder with a single hole, a cylinder with multiple holes, a tablet, and the like.

A combustion chamber 60 accommodating gas generating agent 61 is located in a space surrounding a portion where enhancer cup 46 described above is arranged, in the space inside the housing constituted of lower shell 10 and upper shell 20. More specifically, enhancer cup 46 described above is arranged to protrude into combustion chamber 60 formed in the inside of the housing, and a space provided in a portion facing an outer surface of a sidewall portion of this enhancer cup 46 is formed as combustion chamber 60.

In addition, in a space radially surrounding combustion chamber 60 accommodating this gas generating agent 61, filter 70 is arranged along an inner circumference of the housing. Filter 70 has a hollow cylindrical shape, and is arranged such that a central axis thereof substantially matches with the axial direction of the housing.

Gas generating agent 61 is an agent which is ignited by thermal particles generated as a result of actuation of igniter 40 and produces a gas as it bums. A non-azide-based gas generating agent is preferably employed as gas generating agent 61, and gas generating agent 61 is formed as a molding generally containing a fuel, an oxidizing agent, and an additive. For the fuel, for example, a triazole derivative, a tetrazole derivative, a guanidine derivative, an azodicarbonamide derivative, a hydrazine derivative, or the like, or combination thereof is made use of. Specifically, for example, nitroguanidine, guanidine nitrate, cyanoguanidine, 5-aminotetrazole, and the like are suitably made use of. In addition, as the oxidizing agent, for example, basic nitrate such as basic copper nitrate, perchlorate such as ammonium perchlorate or potassium perchlorate, nitrate containing cations selected from an alkali metal, an alkali earth metal, a transition metal, and ammonia, or the like is made use of. As the nitrate, for example, sodium nitrate, potassium nitrate, or the like is suitably made use of. Moreover, as the additive, a binder, a slag formation agent, a combustion modifier, or the like is exemplified. As the binder, for example, metal salt of carboxymethyl cellulose, an organic binder such as stearate, or an inorganic binder such as synthetic hydrotalcite and Japanese acid clay can suitably be made use of. As the slag formation agent, silicon nitride, silica, Japanese acid clay, or the like can suitably be made use of. In addition, as the combustion modifier, a metal oxide, ferrosilicon, activated carbon, graphite, or the like can suitably be made use of.

A shape of a molding of gas generating agent 61 includes various shapes such as a particulate shape including a granule, a pellet, and a column, and a disc shape. In addition, among columnar moldings, a molding with holes having holes in the molding (such as a cylindrical shape with a single hole or a cylindrical shape with multiple holes) is also made use of. These shapes are preferably selected as appropriate depending on specifications of an air bag apparatus in which gas generator 1A is incorporated, and for example, a shape optimal for the specifications is preferably selected by selecting a shape allowing change over time of a rate of generation of a gas during burning of gas generating agent 61. Furthermore, in addition to a shape of gas generating agent 61, a size of a molding or an amount thereof for filling is preferably selected as appropriate, in consideration of a linear burning velocity, a pressure exponent, or the like of gas generating agent 61.

For example, a filter obtained by winding and sintering a metal wire rod of stainless steel or iron steel, a filter formed by press-working a mesh material into which metal wire rods are knitted to thereby pack the same, a filter obtained by winding a perforated metal plate, or the like is made use of as filter 70. Here, as the mesh material, specifically, a wire gauze of stocking stitch, a plain-woven wire gauze, an aggregate of crimped metal wire rods, or the like is made use of. In addition, as the perforated metal plate, for example, expanded metal obtained by making staggered cuts in a metal plate and forming holes by widening the cuts to thereby work the metal plate in a mesh, hook metal obtained by perforating a metal plate and collapsing burrs caused around a periphery of the hole for flattening, or the like is made use of. In this case, a size or a shape of a hole to be formed can be changed as appropriate as required, and holes different in size or shape may be included in the same metal plate. It is noted that, for example, a steel plate (mild steel) or a stainless steel plate can suitably be made use of as a metal plate, and a nonferrous metal plate of aluminum, copper, titanium, nickel, or an alloy thereof, or the like can also be made use of.

Filter 70 functions as cooling means for cooling a gas by depriving heat at a high temperature of the gas when the gas produced in combustion chamber 60 passes through this filter 70 and also functions as removal means for removing by catching, slag (residues) contained in the gas. Therefore, in order to sufficiently cool the gas and to avoid emission of the slag to the outside, the gas produced in combustion chamber 60 should be caused to reliably pass through filter 70.

An outer circumferential surface of filter 70 is located at a prescribed distance from the inner circumferential surface of circumferential wall portion 12 of lower shell 10 and the inner circumferential surface of circumferential wall portion 22 of upper shell 20. A plurality of gas discharge openings 23 are provided in circumferential wall portion 22 of upper shell 20 in a portion facing filter 70. This gas discharge opening 23 serves to guide an actuation gas which has passed through filter 70 to the outside of the housing. To a main surface of circumferential wall portion 22 of upper shell 20, which is located on a side of filter 70, a sealing member 24 is attached to close gas discharge opening 23. An aluminum foil or the like having an adhesive member applied to its one surface is made use of as this sealing member 24. Thus, hermeticity of combustion chamber 60 is ensured.

In the space inside the housing, a supporting member 62 for fixing an axial end portion of filter 70 located on the side of top plate portion 21 to the housing is arranged at the end portion of upper shell 20 on the side of top plate portion 21. Supporting member 62 has a site abutting to top plate portion 21 of upper shell 20 and a site abutting to an inner circumferential surface of the axial end portion of filter 70 located on the side of top plate portion 21.

In the inside of this supporting member 62, a cushion material 64 is arranged to be in contact with gas generating agent 61 accommodated in combustion chamber 60. This cushion material 64 is provided for the purpose of preventing gas generating agent 61 made of a molding from being crushed by vibration or the like, and a molding of ceramics fibers or a foamed resin (such as foamed silicone) is suitably made use of.

On the other hand, as shown in Figs. 1 and 2, in the space inside the housing, a positioning portion 38 is located at the end portion of lower shell 10 on the side of bottom plate portion 11. Positioning portion 38 is provided in a portion of bottom plate portion 11 of lower shell 10, which faces combustion chamber 60, and has an abutment portion 38a abutting to the inner circumferential surface of the axial end portion of filter 70 located on the side of bottom plate portion 11 and a margin for securing 38b secured along an inner surface of bottom plate portion 11. Positioning portion 38 has an annular shape so as to abut to filter 70 along a circumferential direction of filter 70.

Here, positioning portion 38 is a site for positioning of filter 70 in a radial direction during assembly of filter 70 to lower shell 10, and is formed from a resin-molded portion formed by attaching a fluid resin material to an inner surface of bottom plate portion 11 of lower shell 10 and solidifying the fluid resin material. Namely, positioning portion 38 is formed by injection molding with the use of a mold (more particularly, outsert molding).

For a source material for positioning portion 38 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of.

An operation of gas generator 1A in the present embodiment will now be described with reference to Fig. 1.

When a vehicle on which gas generator 1A in the present embodiment is mounted collides, collision sensing means separately provided in the vehicle senses collision, and based thereon, igniter 40 is actuated in response to power feed through a control unit separately provided in the vehicle. Enhancer agent 48 accommodated in enhancer chamber 47 burns as it is ignited by flame produced as a result of actuation of igniter 40 and produces a large number of thermal particles. As this enhancer agent 48 bums, enhancer cup 46 bursts or melts and thermal particles described above flow into combustion chamber 60.

Thermal particles which have flowed in ignite and bum gas generating agent 61 accommodated in combustion chamber 60 and a large amount of gas is produced. The gas produced in combustion chamber 60 passes through filter 70. At that time, heat is deprived of the gas through filter 70 and the gas is cooled, slag contained in the gas is removed by filter 70, and the gas flows into an outer peripheral portion of the housing.

As an internal pressure in the housing increases, sealing by sealing member 24 which has closed gas discharge opening 23 of upper shell 20 is broken, and the gas is discharged to the outside of the housing through gas discharge opening 23. The discharged gas is introduced in the air bag provided adjacent to gas generator 1A and it expands and develops the air bag.

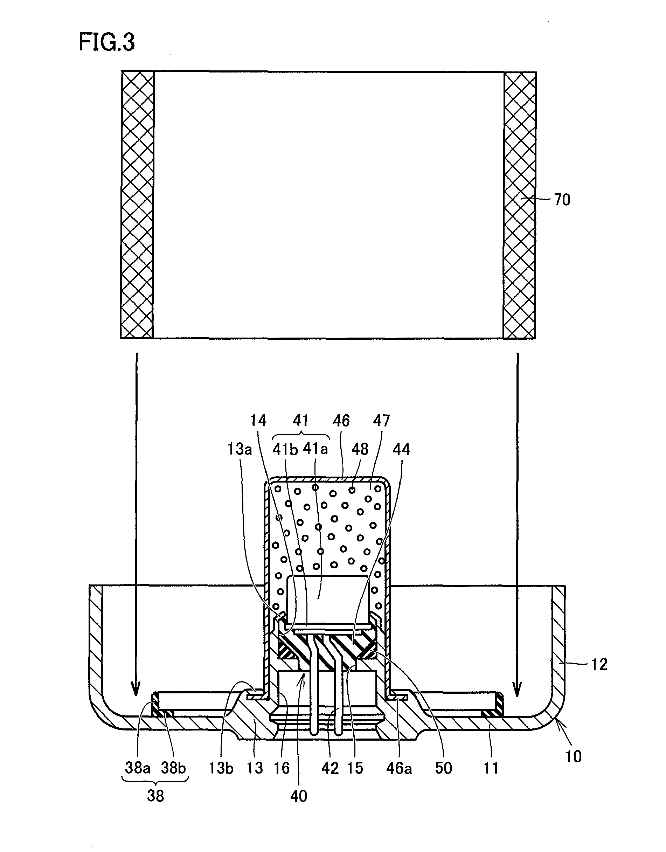

Fig. 3 is a schematic diagram showing a manner of assembly of the filter to the lower shell of the gas generator in the present embodiment. A procedure for assembly of filter 70 of gas generator 1A in the present embodiment will now be described with reference to this Fig. 3.

As shown in Fig. 3, in gas generator 1A in the present embodiment, since positioning portion 38 formed from the resin-molded portion in advance by injection molding is provided on bottom plate portion 11 of lower shell 10, assembly of filter 70 can be achieved by externally inserting hollow cylindrical filter 70 around positioning portion 38 from the inside of lower shell 10. Here, filter 70 abuts to abutment portion 38a having an annular shape and the inner circumferential surface of the axial end portion of filter 70 located on the side of bottom plate portion 11 comes in contact with abutment portion 38a. Thus, filter 70 is assembled to lower shell 10.

The following effect can be obtained by gas generator 1A in the present embodiment described above.

Firstly, since positioning portion 38 is formed by injection molding while it is secured to lower shell 10, positioning portion 38 does not flutter nor float by vibration even though vibration is provided to lower shell 10 in the step of filling with gas generating agent 61 performed after assembly of filter 70 to lower shell 10. Therefore, such a defective condition as gas generating agent 61 coming around an unintended portion is not caused, and combustion chamber 60 can smoothly be filled with gas generating agent 61 formed from a prescribed amount of molding. Therefore, by adopting the construction above, a gas generator can readily be manufactured without any defect.

Secondly, since positioning portion 38 is formed from the resin-molded portion formed by injection molding, it is lighter in weight than the conventionally employed plate-shaped member made of metal and weight of the gas generator as a whole does not increase more than necessary. Therefore, by adopting the construction above, a gas generator achieving lighter weight can be obtained.

Thirdly, since positioning portion 38 has an annular shape covering the entire inner circumferential surface of the axial end portion of filter 70 located on the side of bottom plate portion 11, positioning portion 38 also functions as an effluence prevention member preventing some of gas from flowing out through a gap between filter 70 and lower shell 10 and discharging through gas discharge opening 23 without passage through filter 70 during actuation of gas generator 1A. Therefore, a high-performance gas generator capable of obtaining desired gas output can be obtained and a gas generator comparable in terms of performance to a conventional gas generator including a plate-shaped member made of metal as the effluence prevention member can be obtained.

Fourthly, since positioning portion 38 is formed integrally with a holding portion 30, the assembly step is simplified. Consequently, manufacturing cost can be reduced as compared with the conventional example and a gas generator can inexpensively be manufactured.

Thus, with gas generator 1A in the present embodiment, a high-performance gas generator which can readily be manufactured without any defect and achieves lighter weight can be obtained.

It is noted that, with gas generator 1A in the present embodiment, as compared with a case where a plate-shaped member made of metal is arranged in a combustion chamber as in the conventional gas generator, a volume in combustion chamber 60 occupied by positioning portion 38 can also be decreased, so that an effect that an amount of filling with gas generating agent 61 can accordingly be increased or a gas generator can accordingly be reduced in size can also be obtained.

In addition, in gas generator 1A in the present embodiment, positioning portion 38 is formed of resin. Therefore, slag caused by combustion of gas generating agent 61 is blown toward positioning portion 38 and adheres thereto, and thus the slag can be entangled for removal. As compared with the case where a plate-shaped member made of metal is arranged in a combustion chamber as in the conventional gas generator, capability of catching slag can be enhanced.

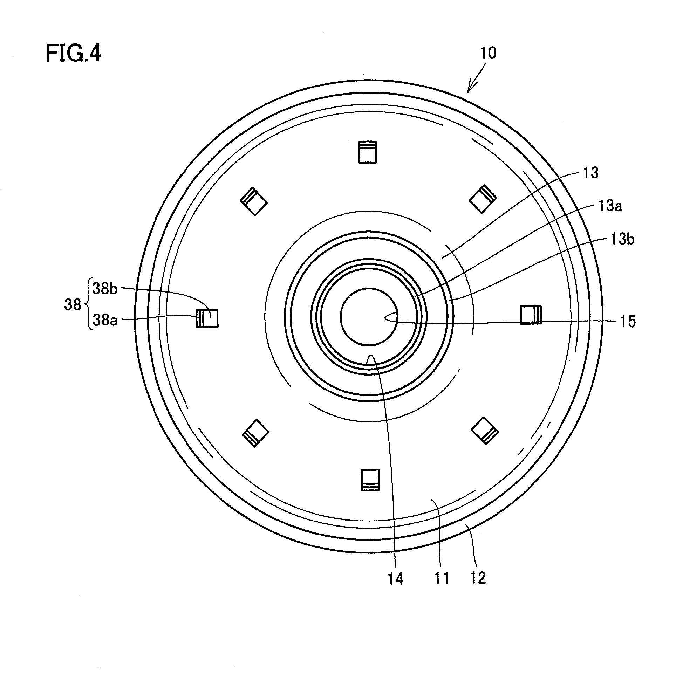

Fig. 4 is a plan view of a lower shell of a gas generator according to a variation based on the present embodiment. The gas generator according to the variation based on the present embodiment will now be described with reference to this Fig. 4.

In gas generator 1A in the present embodiment described above, a positioning portion having an annular shape is employed as positioning portion 38. In the gas generator according to the present variation, however, positioning portions arranged as aligned intermittently along a circumferential direction of filter 70 are employed as positioning portion 38 as shown in Fig. 4. The plurality of positioning portions 38 each have abutment portion 38a abutting to filter 70 and margin for securing 38b, and as in the case of the present embodiment described above, they are formed from the resin-molded portion formed by adhering a fluid resin material to the inner surface of bottom plate portion 11 of lower shell 10 and solidifying the same.

In the case of such a construction as well, an effect the same as in the case of gas generator 1A in the present embodiment described above can be obtained. The present variation, however, is constructed such that the inner circumferential surface of the axial end portion of filter 70 located on the side of bottom plate portion 11 is partly not covered with positioning portion 38, and therefore positioning portion 38 does not exhibit the function as the effluence prevention member described above. In a case where gas discharge opening 23 is provided at a position relatively closer to an upper end portion of circumferential wall portion 12, 22 of the housing, a case where mechanical strength of lower shell 10 is sufficiently high, or the like, however, there may also originally be no possibility that the gas flows out from between filter 70 and lower shell 10, and in that case, an amount of resin material used for forming positioning portion 38 can be reduced by adopting the construction as in the present variation and a gas generator of lighter weight can be manufactured more inexpensively.

### (Embodiment 2)

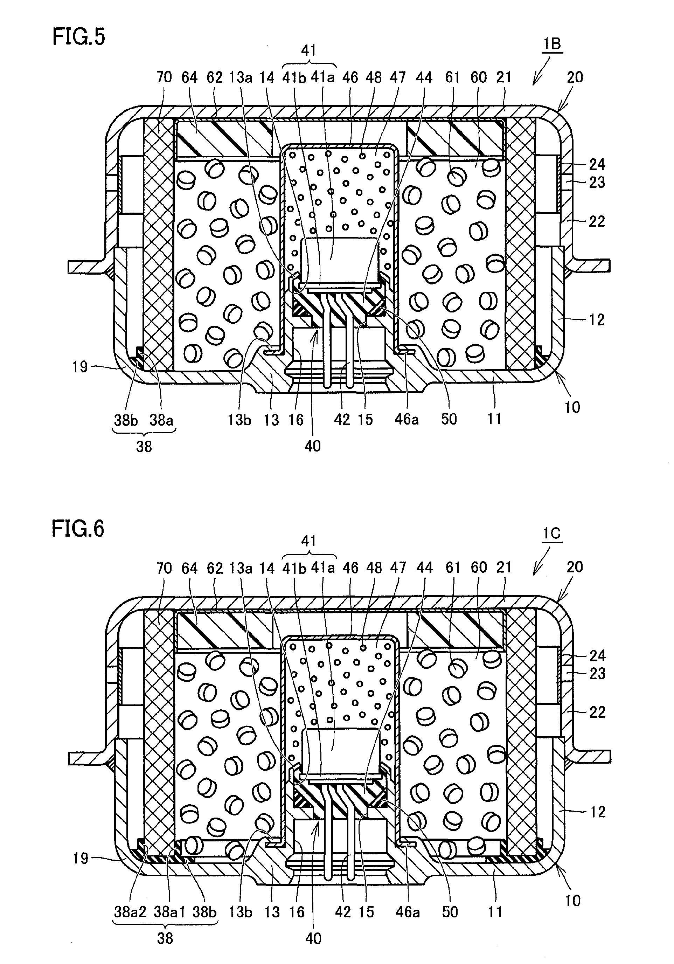

Fig. 5 is a schematic diagram of a gas generator in Embodiment 2 of the present invention. A gas generator 1B in the present embodiment will be described below with reference to this Fig. 5.

As shown in Fig. 5, in gas generator 1B in the present embodiment, positioning portion 38 is not provided on bottom plate portion 11 of lower shell 10, but is provided on a curved corner portion 19 located between bottom plate portion 11 and circumferential wall portion 12. Positioning portion 38 has abutment portion 38a abutting to the outer circumferential surface of the axial end portion of filter 70 located on the side of bottom plate portion 11 and margin for securing 38b secured along an inner surface of curved corner portion 19. As in the case of Embodiment 1 of the present invention described above, positioning portion 38 is formed from the resin-molded portion formed by adhering a fluid resin material to the inner surface of lower shell 10 and solidifying the same. It is noted that assembly of filter 70 to lower shell 10 is carried out by internally inserting hollow cylindrical filter 70 around positioning portion 38 from the inside of lower shell 10.

In the case of gas generator 1B in the present embodiment described above as well, an effect the same as in the case of gas generator 1A in Embodiment 1 of the present invention described above can be obtained. Namely, since positioning portion 38 is formed by injection molding while it is secured to lower shell 10, a gas generator which can readily be manufactured without any defect and achieves lighter weight can be obtained. In addition, in the case where positioning portion 38 is formed to have an annular shape as in the case of Embodiment 1 of the present invention described above, positioning portion 38 also exhibits the function as the effluence prevention member. In the case where a plurality of positioning portions 38 are arranged as aligned intermittently along the circumferential direction of filter 70, further lighter weight and lower cost can be achieved.

### (Embodiment 3)

Fig. 6 is a schematic diagram of a gas generator in Embodiment 3 of the present invention. A gas generator 1C in the present embodiment will be described below with reference to this Fig. 6.

As shown in Fig. 6, in gas generator 1C in the present embodiment, positioning portion 38 is provided to lie astride bottom plate portion 11 of lower shell 10 and curved corner portion 19. Positioning portion 38 has an abutment portion 38a1 abutting to the inner circumferential surface of the axial end portion of filter 70 located on the side of bottom plate portion 11, an abutment portion 38a2 abutting to the outer circumferential surface of the axial end portion of filter 70 located on the side of bottom plate portion 11, and margin for securing 38b continuing to these abutment portions 38a1, 38a2 and secured to the inner surface of bottom plate portion 11 of lower shell 10 and the inner surface of curved corner portion 19. In addition, an end surface of the axial end portion of filter 70 located on the side of bottom plate portion 11 abuts to margin for securing 38b. As in the case of Embodiment 1 of the present invention described above, positioning portion 38 is formed from the resin-molded portion formed by adhering a fluid resin material to the inner surface of lower shell 10 and solidifying the same. It is noted that assembly of filter 70 to lower shell 10 is carried out by inserting hollow cylindrical filter 70 in between abutment portions 38a1, 38a2 provided in positioning portion 38 from the inside of lower shell 10.

In the case of gas generator 1C in the present embodiment described above as well, an effect the same as in the case of gas generator 1A in Embodiment 1 of the present invention described above can be obtained. Namely, since positioning portion 38 is formed by injection molding while it is secured to lower shell 10, a gas generator which can readily be manufactured without any defect and achieves lighter weight can be obtained. In addition, in the case where positioning portion 38 is formed to have an annular shape as in the case of Embodiment 1 of the present invention described above, positioning portion 38 also exhibits the function as the effluence prevention member. In the case where a plurality of positioning portions 38 are arranged as aligned intermittently along the circumferential direction of filter 70, further lighter weight and lower cost can be achieved.

### (Embodiment 4)

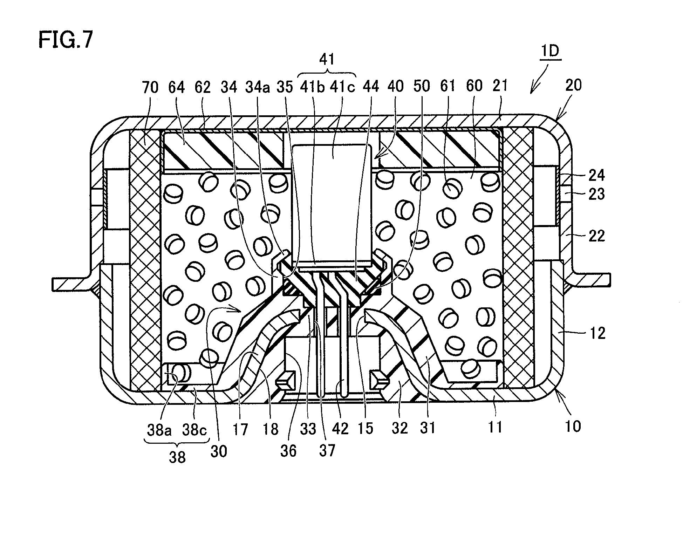

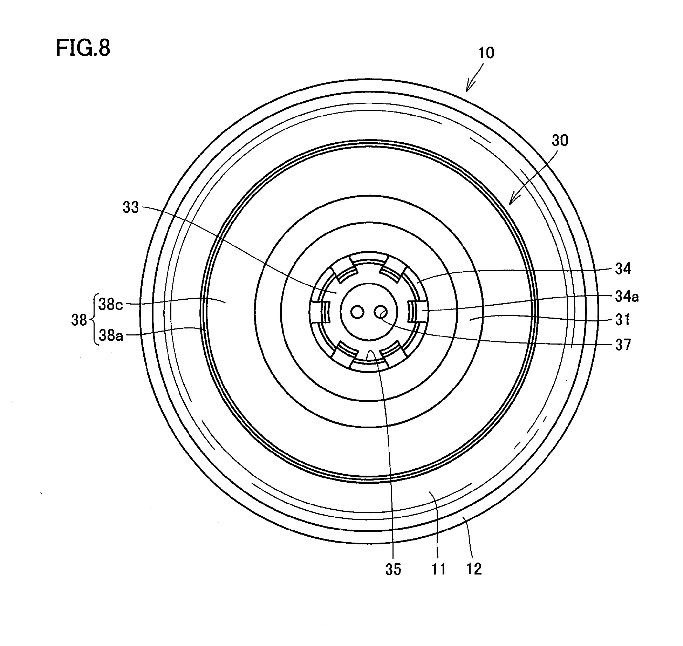

Fig. 7 is a schematic diagram of a gas generator in Embodiment 4 of the present invention. In addition, Fig. 8 is a plan view of a lower shell of the gas generator shown in Fig. 7. A gas generator 1D in the present embodiment will be described below with reference to these Figs. 7 and 8.

As shown in Figs. 7 and 8, gas generator 1D in the present embodiment is different from gas generator 1A in Embodiment 1 of the present invention described above in a shape of lower shell 10 and a structure for assembly of igniter 40 to lower shell 10. Specifically, in gas generator 1D in the present embodiment, a holding portion 30 formed from a resin-molded portion is provided in lower shell 10 and igniter 40 is attached to holding portion 30, so that igniter 40 is assembled to lower shell 10.

More specifically, as shown in Fig. 7, in gas generator 1D in the present embodiment, lower shell 10 is made of a press-formed product formed by press-working one plate-shaped member made of metal. A protruding cylindrical portion 17 protruding toward top plate portion 21 is provided in a substantially central portion of bottom plate portion 11 of lower shell 10, so that a depression portion 18 is formed in the substantially central portion of bottom plate portion 11 of lower shell 10. Protruding cylindrical portion 17 is a site to which igniter 40 is fixed with holding portion 30 being interposed, and depression portion 18 is a site serving as a space for providing a female connector portion 36 in holding portion 30. Here, protruding cylindrical portion 17 is formed to be in a cylindrical shape with bottom, and tapered such that an outer diameter thereof decreases toward top plate portion 21. In addition, opening 15 is provided at an axial end portion of protruding cylindrical portion 17, which is located on a side of top plate portion 21. Opening 15 is a site through which a pair of terminal pins 42 of igniter 40 is inserted.

As described above, lower shell 10 is fabricated by press-working one plate-shaped member made of metal. Specifically, lower shell 10 is fabricated by using a pair of molds consisting of an upper mold and a lower mold to press one plate-shaped member made of metal in a vertical direction to thereby form the plate-shaped member in a shape as illustrated.

Here, for example, a metal plate composed of stainless steel, iron steel, an aluminum alloy, a stainless alloy, or the like and having a thickness before pressing approximately not smaller than 1.5 mm and not greater than 3.0 mm is made use of as the plate-shaped member made of metal, and suitably, what is called a high tensile steel plate which is free from such breakage as fracture even at the time of application of tensile stress not lower than 440 MPa and not higher than 780 MPa is suitably made use of. It is noted that, regarding a thickness after pressing, a thickness of a smallest thickness portion is preferably not smaller than approximately 1.0 mm. In addition, press-working may be carried out through hot forging or cold forging, and from a point of view of improvement in dimension accuracy, it is more suitably carried out through cold forging.

Holding portion 30 described above is provided around protruding cylindrical portion 17 provided in the substantially central portion of bottom plate portion 11 of lower shell 10. Holding portion 30 has an inner coating portion 31 covering a part of an inner surface of bottom plate portion 11 of lower shell 10, an outer coating portion 32 covering a part of an outer surface of bottom plate portion 11 of lower shell 10, and a coupling portion 33 located within opening 15 provided in bottom plate portion 11 of lower shell 10 and continuing to each of inner coating portion 31 and outer coating portion 32.

This holding portion 30 is formed from a resin-molded portion formed by attaching an insulating fluid resin material to bottom plate portion 11 so as to reach a part of the outer surface of bottom plate portion 11 from a part of the inner surface thereof through opening 15 provided in bottom plate portion 11 of lower shell 10 and solidifying the fluid resin material. Namely, holding portion 30 is formed by injection molding with the use of a mold (more particularly, outsert molding).

For a source material for holding portion 30 formed by injection molding, a resin material excellent in heat resistance, durability, corrosion resistance, and the like after curing is suitably selected and made use of. In that case, without being limited to a thermosetting resin represented by an epoxy resin and the like, a thermoplastic resin represented by a polybutylene terephthalate resin, a polyethylene terephthalate resin, a polyamide resin (such as nylon 6 or nylon 66), a polypropylene sulfide resin, a polypropylene oxide resin, and the like can also be made use of. In a case where these thermoplastic resins are selected as a source material, in order to ensure mechanical strength of holding portion 30 after molding, glass fibers or the like are preferably contained as fillers in these resin materials. In a case where sufficient mechanical strength can be ensured only by a thermoplastic resin, however, a filler as described above does not have to be added.

Holding portion 30 is secured to bottom plate portion 11 at a surface on a side of bottom plate portion 11, of each of inner coating portion 31, outer coating portion 32, and coupling portion 33 described above. Here, holding portion 30 is provided to entirely cover protruding cylindrical portion 17 provided in bottom plate portion 11 of lower shell 10, so that protruding cylindrical portion 17 is completely buried in holding portion 30.

In a portion of inner coating portion 31 of holding portion 30, which is opposed to top plate portion 21, a holding wall portion 34 having an annular shape is erected toward top plate portion 21, so that an accommodation recess portion 35 is provided in holding portion 30. Accommodation recess portion 35 is a site for receiving and accommodating a part of igniter 40.

Igniter 40 is an ignition device producing flame and thermal particles for burning gas generating agent 61 and assembled to holding portion 30 as a part thereof is accommodated in accommodation recess portion 35 described above. Here, unlike the igniter in Embodiment 1 of the present invention described above, igniter 40 equipped in gas generator 1D in the present embodiment is an igniter of a type in which an ignition agent and an enhancer agent are loaded in agent loaded portion 41.

Igniter 40 includes agent loaded portion 41 in which an agent generating flame and thermal particles as it bums is loaded and a pair of terminal pins 42 described above. Agent loaded portion 41 contains an ignition agent generating flame as it is ignited and bums at the time of actuation, a resistor for igniting this ignition agent, and an enhancer agent producing a large number of thermal particles as it is ignited by the flame caused by burning of the ignition agent and it bums. The pair of terminal pins 42 is connected to agent loaded portion 41 for igniting the ignition agent.

More specifically, igniter 40 includes an igniter cup 41c made of a cup-shaped member, base portion 41b which closes an opening end of igniter cup 41c and holds the pair of terminal pins 42 as the pins are inserted therethrough, and cover portion 44 provided to cover a part of terminal pin 42 and base portion 41b, and has such a construction that the resistor (bridge wire) is attached to couple tip ends of the pair of terminal pins 42 inserted in igniter cup 41 c to each other, the ignition agent is loaded into igniter cup 4 1 c so as to surround or be proximate to this resistor, and the enhancer agent is loaded to be in contact with the ignition agent. It is noted that igniter cup 41c is generally made of metal or plastic.

Upon sensing collision, a prescribed amount of current flows in a resistor through terminal pin 42. As the prescribed amount of current flows in the resistor, Joule heat is generated in the resistor and the ignition agent starts burning. Flame at a high temperature caused by burning bums the enhancer agent and produces a large number of thermal particles. As the enhancer agent bums, a pressure and a temperature within igniter cup 41c increase, igniter cup 41c bursts or melts, and the thermal particles are released to the outside of igniter 40.

Holding wall portion 34 having an annular shape defining accommodation recess portion 35 of holding portion 30 is provided with a plurality of locking pawl portions 34a provided to align along a circumferential direction at an end portion thereof on the side of top plate portion 21, and locking pawl portions 34a are all formed such that their tip ends face inward. The plurality of locking pawl portions 34a are sites corresponding to a locking portion for fixing igniter 40 to holding portion 30, which are integrally provided simultaneously with other sites of holding portion 30 at the time of injection molding of holding portion 30. Therefore, the plurality of locking pawl portions 34a are all elastically deformable, and holding wall portion 34 itself is elastically deformable.

On the other hand, cover portion 44 of igniter 40 is provided with a site of which outer shape is formed to be greater than agent loaded portion 41 (that is, a site extending radially outward), and the site corresponds to a locked portion for fixing igniter 40 to holding portion 30. The site extends annularly along a circumferential direction, and includes inclined upper surface and lower surface and a circumferential surface continuing to these upper surface and lower surface.

In assembly, while holding portion 30 formed from the resin-molded portion is formed in advance by injection molding in bottom plate portion 11 of lower shell 10 and sealing member 50 is accommodated within accommodation recess portion 35 of holding portion 30, igniter 40 is inserted in accommodation recess portion 35 from above (that is, the side of top plate portion 21 after assembly). Here, a pair of terminal pins 42 of igniter 40 is inserted in a pair of insertion holes 37 provided in coupling portion 33 of holding portion 30.

Here, locking pawl portions 34a of holding portion 30 come in contact with the inclined lower surface of cover portion 44 of igniter 40. As described above, however, since locking pawl portions 34a and holding wall portion 34 are elastically deformable, locking pawl portions 34a and holding wall portion 34 retract radially outward, so that cover portion 44 of igniter 40 can be inserted in accommodation recess portion 35.

Then, after igniter 40 is inserted in holding portion 30, locking pawl portions 34a go beyond a side portion of cover portion 44 so that locking pawl portions 34a and holding wall portion 34 return to their original shapes and locking pawl portions 34a are locked to the inclined upper surface of cover portion 44 described above. Thus, igniter 40 is fitted in accommodation recess portion 35 while cover portion 44 thereof is accommodated in accommodation recess portion 35 of holding portion 30, and thus igniter 40 is held by holding portion 30.

In a portion of outer coating portion 32 of holding portion 30, which faces the outside, female connector portion 36 is formed. This female connector portion 36 is a site for receiving a male connector (not shown) of a harness for connecting igniter 40 and a control unit (not shown) to each other, and it is located in depression portion 18 provided in bottom plate portion 11 of lower shell 10. In this female connector portion 36, a portion of terminal pin 42 of igniter 40 closer to a lower end is arranged as being exposed. The male connector is inserted in female connector portion 36, so that electrical conduction between a core wire of the harness and terminal pin 42 is established.

A pair of insertion holes 37 is provided in coupling portion 33 of holding portion 30. This pair of insertion holes 37 is a site through which a pair of terminal pins 42 of igniter 40 is inserted, and opposing ends thereof reach accommodation recess portion 35 and female connector portion 36 described above, respectively.

In addition, as shown in Figs. 7 and 8, separately from a holding portion main body constituted of inner coating portion 31, outer coating portion 32, and coupling portion 33 described above, holding portion 30 is provided with an extended portion 38c extending radially outward of the housing along the inner surface of bottom plate portion 11 from the holding portion main body. Extended portion 38c reaches the axial end portion of filter 70 located on the side of bottom plate portion 11, and abutment portion 38a serving as positioning portion 38 is provided at the tip end of extended portion 38c. Extended portion 38c has an annular disc-shaped shape and it also serves as the margin for securing for positioning portion 38 as it is secured to bottom plate portion 11.

Positioning portion 38 is provided in a portion of bottom plate portion 11 of lower shell 10, which faces combustion chamber 60, and abutment portion 38a abuts to the inner circumferential surface of the axial end portion of filter 70 located on the side of bottom plate portion 11. Positioning portion 38 has an annular shape so as to abut to filter 70 along the circumferential direction of filter 70.

Here, as in the case of Embodiment 1 of the present invention described above, positioning portion 38 is a site for positioning of filter 70 in a radial direction during assembly of filter 70 to lower shell 10, and it is formed integrally with the holding portion main body at the time of injection molding of the holding portion main body of holding portion 30 described above. Therefore, positioning portion 38 is formed by injection molding with the use of a mold (more particularly, outsert molding).

In the case of gas generator 1D in the present embodiment described above as well, an effect substantially the same as in the case of gas generator 1A in Embodiment 1 of the present invention described above can be obtained. Namely, since positioning portion 38 is formed by injection molding while it is secured to lower shell 10, a gas generator which can readily be manufactured without any defect and achieves lighter weight can be obtained. In addition, since positioning portion 38 is formed to have an annular shape as in the case of Embodiment 1 of the present invention described above, positioning portion 38 also exhibits the function as the effluence prevention member, and a gas generator comparable in terms of performance to the conventional gas generator including a plate-shaped member made of metal for the effluence prevention member can be obtained.

In addition, with gas generator 1D in the present embodiment, since positioning portion 38 is formed integrally with holding portion 30, a plate-shaped member made of metal as an independent part which has conventionally been required is no longer necessary. Thus, the number of parts can consequently be reduced and an assembly process is simplified, so that manufacturing cost can be reduced as compared with the conventional example and a gas generator can inexpensively be manufactured.

Moreover, with gas generator 1D in the present embodiment, since positioning portion 38 can be provided integrally with the holding portion main body of holding portion 30 for holding igniter 40, it is not necessary to form only positioning portion 38 separately by injection molding and a manufacturing process can also be simplified.

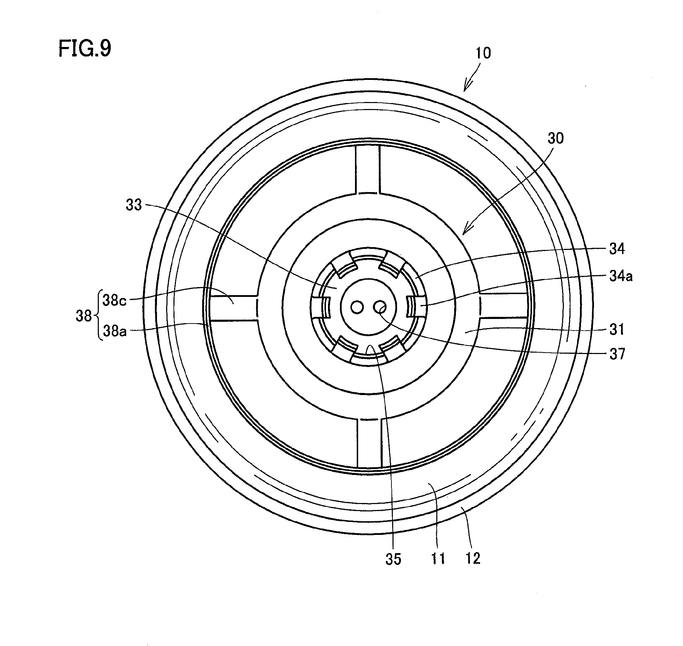

Fig. 9 is a plan view of a lower shell of a gas generator according to a first variation based on the present embodiment. The gas generator according to the first variation based on the present embodiment will now be described with reference to this Fig. 9.

In gas generator 1D in the present embodiment described above, extended portion 38c is formed from an annular disc-shaped site. In the gas generator according to the present variation, however, extended portions 38c are formed from a plurality of sites each in a long flat plate shape radially extending from the holding portion main body as shown in Fig. 9. Then, the construction is such that, at tip end portions located radially outward of the plurality of extended portions 38c, abutment portion 38a having an annular shape as continuing to the tip end portions is provided and positioning portion 38 is formed from the plurality of extended portions 38c and abutment portion 38a having an annular shape.

In the case of such a construction as well, an effect the same as in the case of gas generator 1D in the present embodiment described above can be obtained and an amount of resin material used for forming extended portion 38c can be reduced. Thus, a gas generator of lighter weight can be manufactured more inexpensively.

In addition, in the case where the construction above is adopted, as compared with a case of gas generator 1D in the present embodiment described above, positioning portion 38 is no longer arranged in combustion chamber 60. Therefore, an effect that an amount of filling with gas generating agent 61 can accordingly be increased or a gas generator can accordingly be reduced in size can also be obtained.

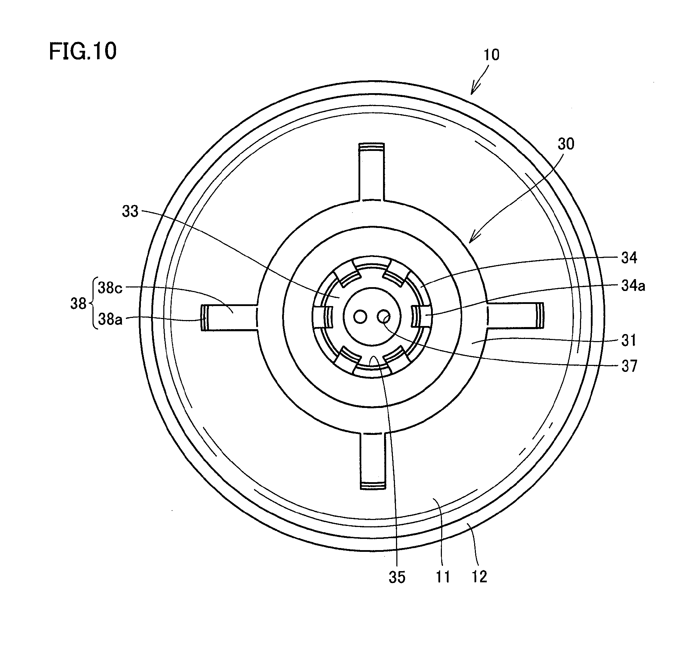

Fig. 10 is a plan view of a lower shell of a gas generator according to a second variation based on the present embodiment. The gas generator according to the second variation based on the present embodiment will now be described with reference to this Fig. 10.

In gas generator 1D in the present embodiment described above, extended portion 38c is formed from a site in an annular disc-shaped shape and abutment portion 38a is formed from a site in an annular shape. In the gas generator according to the present variation, as shown in Fig. 10, extended portions 38c are formed from a plurality of sites each in an elongated flat plate shape radially extending from the holding portion main body, and at tip end portions located radially outward of the plurality of extended portions 38c, abutment portions 38a are individually provided as continuing to the tip end portions. Thus, the construction is such that a plurality of abutment portions 38a are arranged as aligned intermittently along the circumferential direction of filter 70 and positioning portion 38 is formed from the plurality of extended portions 38c and the plurality of abutment portions 38a.

In the case of such a construction as well, an effect the same as in the case of gas generator 1D in the present embodiment described above can be obtained. It is noted that, in the present variation, since the construction is such that the inner circumferential surface of the axial end portion of filter 70 located on the side of bottom plate portion 11 is partly not covered with positioning portion 38, positioning portion 38 does not exhibit a function as the effluence prevention member described above. In a case where gas discharge opening 23 is provided at a position relatively closer to the upper end portion of circumferential wall portion 12, 22 of the housing, a case where mechanical strength of lower shell 10 is sufficiently high, or the like, however, there may also originally be no possibility that the gas flows out from between filter 70 and lower shell 10, and in that case, an amount of resin material used for forming positioning portion 38 can be reduced by adopting the construction as in the present variation and a gas generator of lighter weight can be manufactured more inexpensively.

In addition, in the case where the construction above is adopted, as compared with a case of gas generator 1D in the present embodiment described above, positioning portion 38 is no longer arranged in combustion chamber 60, so that an effect that an amount of filling with gas generating agent 61 can accordingly be increased or a gas generator can accordingly be reduced in size can also be obtained.

### (Embodiment 5)

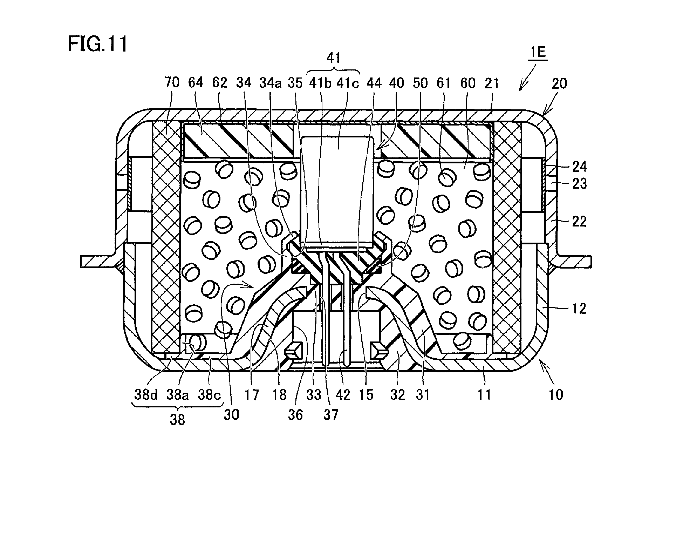

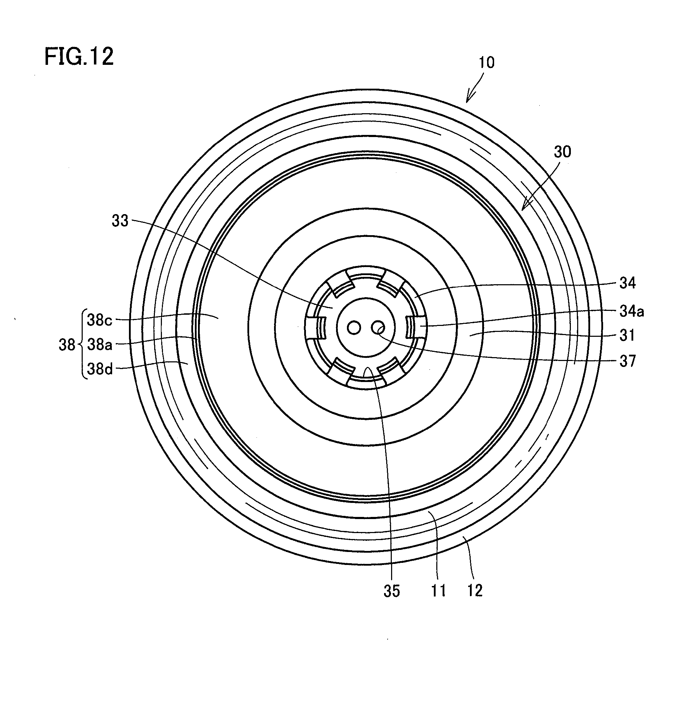

Fig. 11 is a schematic diagram of a gas generator in Embodiment 5 of the present invention. In addition, Fig. 12 is a plan view of a lower shell of the gas generator shown in Fig. 11. A gas generator 1E in the present embodiment will be described below with reference to these Figs. 11 and 12.

As shown in Figs. 11 and 12, gas generator 1E in the present embodiment is different from gas generator 1D in Embodiment 4 of the present invention described above in a shape of positioning portion 38. Specifically, in gas generator 1E in the present embodiment, positioning portion 38 further has an extended protruding portion 38d extending to further protrude radially outward of the housing along the inner surface of bottom plate portion 11 as continuing to the tip end portion located radially outward of extended portion 38c, in addition to abutment portion 38a and extended portion 38c described above. Extended protruding portion 38d abuts to an end surface of the axial end portion of filter 70 located on the side of bottom plate portion 11 and is sandwiched between filter 70 and bottom plate portion 11. It is noted that extended protruding portion 38d has an annular disc-shape so as to abut to filter 70 along the circumferential direction of filter 70.

In the case of gas generator 1E in the present embodiment described above as well, an effect the same as in the case of gas generator 1D in Embodiment 4 of the present invention described above can be obtained. Namely, since positioning portion 38 is formed by injection molding while it is secured to lower shell 10, a gas generator which can readily be manufactured without any defect and achieves lighter weight can be obtained. In addition, since positioning portion 38 is formed to have an annular shape as in the case of Embodiment 4 of the present invention described above, positioning portion 38 also exhibits the function as the effluence prevention member, and a gas generator comparable in terms of performance to the conventional gas generator including a plate-shaped member made of metal for the effluence prevention member can be obtained. Moreover, since positioning portion 38 is formed integrally with holding portion 30 as in the case of Embodiment 4 of the present invention described above, a plate-shaped member made of metal as an independent part which has conventionally been required is no longer necessary. Thus, the number of parts can be reduced and an assembly process is simplified, so that manufacturing cost can consequently be reduced as compared with the conventional example and a gas generator can inexpensively be manufactured. Furthermore, as in the case of Embodiment 4 of the present invention described above, since positioning portion 38 can be provided integrally with the holding portion main body of holding portion 30 for holding igniter 40, it is not necessary to form only positioning portion 38 separately by injection molding and a manufacturing process can also be simplified.

Additionally, with gas generator 1E in the present embodiment, hermeticity of combustion chamber 60 located in the housing can further be enhanced. Namely, in gas generator 1E in the present embodiment, the construction is such that extended portion 38c is in an annular disc-shaped shape and extended protruding portion 38d located radially outward of extended portion 38c and having an annular disc-shaped shape is sandwiched between filter 70 and bottom plate portion 11 of lower shell 10 around the entire circumference in the circumferential direction. Therefore, not only a long distance between combustion chamber 60 and an external space via an interface portion located between lower shell 10 and holding portion 30 can be ensured, but also intimate contact between holding portion 30 and lower shell 10 in a portion where extended protruding portion 38d is provided is improved by sandwiching above, so that sealability at that site drastically improves. Therefore, occurrence of such a defective condition as moisture absorption by gas generating agent 61 can be prevented and a highly reliable gas generator can be obtained.

### (Embodiment 6)

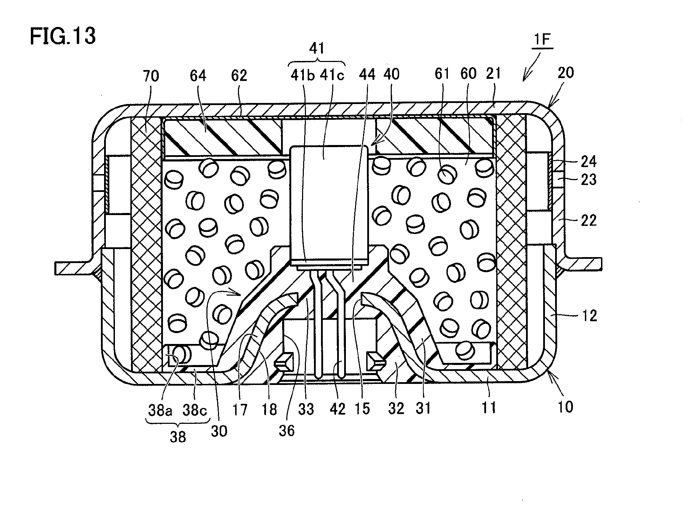

Fig. 13 is a schematic diagram of a gas generator in Embodiment 6 of the present invention. A gas generator 1F in the present embodiment will be described below with reference to this Fig. 13.

As shown in Fig. 13, gas generator 1F in the present embodiment is different from gas generator 1D in Embodiment 4 of the present invention described above in a structure for assembly of igniter 40 to lower shell 10. Specifically, in gas generator 1F in the present embodiment, igniter 40 is assembled integrally to holding portion 30 at the time of injection molding of holding portion 30 formed from the resin-molded portion provided in lower shell 10. Namely, in the present embodiment, igniter 40 is assembled to lower shell 10 by insert molding and a part of holding portion 30 is secured to the surface of igniter 40. It is noted that positioning portion 38 is formed integrally with the holding portion main body at the time of injection molding of the holding portion main body of holding portion 30 described above, as in the case of gas generator 1D in Embodiment 4 of the present invention described above.

In the case of gas generator 1F in the present embodiment described above as well, an effect the same as in the case of gas generator 1D in Embodiment 4 of the present invention described above can be obtained. Namely, since positioning portion 38 is formed by injection molding while it is secured to lower shell 10, a gas generator which can readily be manufactured without any defect and achieves lighter weight can be obtained. In addition, since positioning portion 38 is formed to have an annular shape as in the case of Embodiment 4 of the present invention described above, positioning portion 38 also exhibits the function as the effluence prevention member, and a gas generator comparable in terms of performance to the conventional gas generator including a plate-shaped member made of metal for the effluence prevention member can be obtained. Moreover, since positioning portion 38 is formed integrally with holding portion 30 as in the case of Embodiment 4 of the present invention described above, a plate-shaped member made of metal as an independent part which has conventionally been required is no longer necessary. Thus, the number of parts can be reduced and an assembly process is simplified, so that manufacturing cost can consequently be reduced as compared with the conventional example and a gas generator can inexpensively be manufactured. Furthermore, as in the case of Embodiment 4 of the present invention described above, since positioning portion 38 can be provided integrally with the holding portion main body of holding portion 30 for holding igniter 40, it is not necessary to form only positioning portion 38 separately by injection molding and a manufacturing process can also be simplified.

Characteristic features of the gas generators according to Embodiments 1 to 6 and variations thereof of the present invention described above can naturally be combined with one another within the scope allowable in light of the gist of the present invention. Furthermore, a specific shape, the number, a size, or the like of positioning portion(s) provided in a lower shell described above can also naturally be modified as appropriate.

Thus, each embodiment and a variation thereof above disclosed herein are illustrative and non-restrictive in every respect. The technical scope of the present invention is delimited by the terms of the claims and is intended to include any modifications within the scope and meaning equivalent to the terms of the claims.

### REFERENCE SIGNS LIST

1A to 1F gas generator; 10 lower shell; 11 bottom plate portion; 12 circumferential wall portion; 13 attachment portion; 13a, 13b crimping portion; 14 accommodation recess portion; 15 opening; 16 female connector portion; 17 protruding cylindrical portion; 18 depression portion; 19 curved corner portion; 20 upper shell; 21 top plate portion; 22 circumferential wall portion; 23 gas discharge opening; 24 sealing member; 30 holding portion; 31 inner coating portion; 32 outer coating portion; 33 coupling portion; 34 holding wall portion; 34a locking pawl portion; 35 accommodation recess portion; 36 female connector portion; 37 insertion hole; 38 positioning portion; 38a, 38a1, 38a2 abutment portion; 38b margin for securing; 38c extended portion; 38d extended protruding portion; 40 igniter; 41 agent loaded portion; 41 a squib cup; 41b base portion; 4 1 c igniter cup; 42 terminal pin; 44 cover portion; 46 enhancer cup; 46a flange portion; 47 enhancer chamber; 48 enhancer agent; 50 sealing member; 60 combustion chamber; 61 gas generating agent; 62 supporting member; 64 cushion material; and 70 filter.

## Claims

1. A gas generator, comprising:
a short cylindrical housing which is constituted of a top plate portion (21) and a bottom plate portion (11) closing axial end portions and a circumferential wall portion (12, 22) provided with a gas discharge opening (23) and includes therein a combustion chamber (60) accommodating a gas generating agent (61);
an igniter (40) assembled to said bottom plate portion (11), for burning said gas generating agent (61);
a hollow cylindrical filter (70) disposed in said housing and surrounding said combustion chamber (60) in a radial direction of said housing,
said housing at least having a lower shell (10) including said bottom plate portion (11) and an upper shell (20) including said top plate portion (21); and
a positioning portion (38) formed from a resin-molded portion which is formed by attaching a fluid resin material to an inner surface of said lower shell (10) and solidifying the fluid resin material so that at least a part of the resin-molded portion is secured to said lower shell (10), for positioning said filter (70) in a radial direction by abutting to at least one of an inner circumferential surface and an outer circumferential surface of an axial end portion of said filter (70) located on a side of said bottom plate portion (11).

2. The gas generator according to claim 1, wherein
said positioning portion (38) has an annular shape abutting to said filter (70) along a circumferential direction of said filter (70).

3. The gas generator according to claim 1, wherein
a plurality of said positioning portions (38) are arranged as aligned along a circumferential direction of said filter (70).

4. The gas generator according to claim 1, wherein
said positioning portion (38) is located on said bottom plate portion (11) in a portion facing said combustion chamber (60) and abuts only to the inner circumferential surface of the axial end portion of said filter (70) located on the side of said bottom plate portion (11).

5. A gas generator, comprising:
a short cylindrical housing which is constituted of a top plate portion (21) and a bottom plate portion (11) closing axial end portions and a circumferential wall portion (12, 22) provided with a gas discharge opening (23) and includes therein a combustion chamber (60) accommodating a gas generating agent (61);
an igniter (40) assembled to said bottom plate portion (11), for burning said gas generating agent (61);
a hollow cylindrical filter (70) disposed in said housing and surrounding said combustion chamber (60) in a radial direction of said housing; and
a holding portion (30) provided on said bottom plate portion (11), for holding said igniter (40),
said housing at least having a lower shell (10) including said bottom plate portion (11) and an upper shell (20) including said top plate portion (21),
said lower shell (10) including a protruding cylindrical portion (17) provided to protrude toward said top plate portion (21) and an opening (15) provided at an axial end portion of said protruding cylindrical portion (17), which is located on a side of said top plate portion (21),
said holding portion (30) including a holding portion main body formed from a resin-molded portion which is formed by attaching a fluid resin material to said bottom plate portion (11) so as to at least reach a part of an outer surface of said bottom plate portion (11) from a part of an inner surface of said bottom plate portion (11) through said opening (15) and solidifying the fluid resin material so that at least a part of the resin-molded portion is secured to said bottom plate portion (11), for holding said igniter (40), an extended portion extending outward from said holding portion main body along the inner surface of said bottom plate portion (11), and a positioning portion (38) provided in said extended portion, for positioning said filter (70) in a radial direction by abutting to at least one of an inner circumferential surface and an outer circumferential surface of an axial end portion of said filter (70) located on a side of said bottom plate portion (11).

6. The gas generator according to claim 5, wherein
said extended portion is secured to said bottom plate portion (11).

7. The gas generator according to claim 5, wherein
said positioning portion (38) has an annular shape abutting to said filter (70) along a circumferential direction of said filter (70).

8. The gas generator according to claim 5, wherein
a plurality of said positioning portions (38) are arranged as aligned along a circumferential direction of said filter (70).

9. The gas generator according to claim 5, wherein
said positioning portion (38) is located on said bottom plate portion (11) in a portion facing said combustion chamber (60) and abuts only to the inner circumferential surface of the axial end portion of said filter (70) located on the side of said bottom plate portion (11).
